# EUROPÄISCHE PATENTSCHRIFT

(11) **EP 1 527 958 B1**
(45) Veröffentlichungstag und Bekanntmachung des Hinweises auf die Patenterteilung: **30.01.2008**
(21) Anmeldenummer: 04017283.5
(22) Anmeldetag: 22.07.2004
(51) Int. Cl.: B60R 21/01

(54) **Vorrichtung zur Aufprallerkennung**
Device for crash detection
Dispositif pour détection d'un accident

(30) Priorität: 31.10.2003 DE 10350921
(43) Veröffentlichungstag der Anmeldung: 04.05.2005
(73) Patentinhaber: ROBERT BOSCH GMBH, 70442 Stuttgart (DE)
(72) Erfinder: Wellhoefer, Matthias, 71701 Schwieberdingen (DE); Frese, Volker, 47506 Neunkirchen-Vlugen (DE)

(56) Entgegenhaltungen:
- EP-A- 0 937 612
- EP-A- 1 281 582
- DE-A1- 19 532 620
- US-A- 5 441 301

## Beschreibung

### Stand der Technik

Die Erfindung geht aus von einer Vorrichtung zur Aufprallerkennung nach der Gattung des unabhängigen Patentanspruchs.

Aus DE 102 05 398 A1 ist eine Vorrichtung zur Aufprallerkennung mittels eines Druck- bzw. Temperatursensors bekannt. In Abhängigkeit von einem Signal des Drucksensors steuert ein Steuergerät Personenschutzmittel an.

Aus EP 1 281 582 A ist eine Sensoreinrichtung für Fahrzeuge mit einem Sensor in oder an einer Fahrzeugwand der mit einer Schalt- und/oder Auslöseeinrichtung verbunden ist, bekannt. Der Sensor weist wenigstens einen elastisch verformbaren Schlauch mit einem Schlauchinnenraum auf, der direkt oder über ein Schlauchstück an einen Drucksensor angeschlossen ist, der mit der Schaltung und/oder Auslöseeinrichtung in Verbindung steht, die bei einem vorgegebenen Druck und oder Druckverlauf im Schlauchinnenraum aktiviert wird.

### Vorteile der Erfindung

Die erfindungsgemäße Vorrichtung zur Aufprallerkennung mit den Merkmalen des unabhängigen Patentanspruchs hat demgegenüber den Vorteil, dass der Drucksensor einen Druckänderungssignal an das Steuergerät überträgt. Damit ist es möglich, mit einer geringeren Auflösung das Druckänderungssignal zu übertragen als ein Absolutdrucksignal. Damit wird eine Trennung zwischen auslösenden und nicht auslösenden Crashs besser. Diese feinere Auflösung ist insbesondere im auslöserelevanten Teil der kleiner 10 Millisekunden ist möglich. Wird also das Druckänderungssignal anstatt des Absolutdrucksignals übertragen, so kann das Signal mit 8 Bit abgetastet werden, was eine Kostenersparnis darstellt. Außerdem ist bei der Übertragung des Druckänderungssignals nur dieses mit Sensorrauschen behaftet. Zur Auswertung des Signals können aber auch das Integral und die Ableitung des Druckänderungssignals verwendet werden. Damit lässt sich insbesondere durch die Integration das eigentliche Drucksignal wesentlich rauschärmer und stabiler rekonstruieren. Dadurch, dass die zweite Ableitung aus dem Druckänderungssignal durch einmalige Differenziation bestimmt wird, sind die Abweichungen der zweiten Ableitung des Drucksignals nun wesentlich geringer als wenn das Absolutdrucksignal mit Rauschen zweimal abgeleitet werden muss. Damit ist eine wesentliche Verbesserung Stabilisierung der auslöserelevanten Signale für eine Seitencrashsensorik mit Drucksensorik möglich.

Es ist vorgesehen, dass der Drucksensor in Abhängigkeit vom Druckänderungssignal entweder das Druckänderungssignal oder den Absolutdruck an das Steuergerät überträgt. So kann beispielsweise der Absolutdruck oder das Druckänderungssignal mit Schwellwerten verglichen werden, um in Abhängigkeit davon zu erkennen, ob der Absolutdruck oder das Druckänderungssignal zum Steuergerät übertragen werden muss. Deutet sich nämlich ein Crash an, dann muss das Druckänderungssignal übertragen werden, ansonsten kann der Absolutdruck zum Steuergerät selbst übertragen werden. Dies kann durch ein Softwareschalter oder eine elektronische Schaltung realisiert sein.

Durch die in den abhängigen Ansprüchen aufgeführten Maßnahmen und Weiterbildungen sind vorteilhafte Verbesserungen der im unabhängigen Patentanspruch angegebenen Vorrichtung zur Aufprallerkennung möglich.

Besonders vorteilhaft ist, dass der Drucksensor zur Messung des Druckänderungssignals konfiguriert ist. Hiermit liegt dann ein Drucksensor vor, der direkt die Druckänderung erfasst und nicht den Absolutdruck allein. Damit ist dann auch direkt die Intrusionsgeschwindigkeit die proportional zur Druckänderung ist, messbar. Beispielhaft könnte ein solcher Sensor derart ausgeführt sein: Ein Absolutdrucksensor vergleicht den Umgebungsdruck mit dem Druck in einem Referenzvolumen, das vorzugsweise Vakuum enthält. Der Vergleich funktioniert über die Kraftmessung an einer Membran zwischen Referenzvolumen und Umgebungsvolumen. Im einfachsten Fall eines Druckänderungssensors hat das Referenzvolumen ein Leck über den sich der Druck im Referenzvolumen mit dem Umgebungsdruck ausgleicht. Über die Größe des Lecks kann die Zeitkonstante der Änderung bestimmt werden. In diesem Fall sind aber zwei Drucksensoren notwendig: ein Änderungssensor und ein Absolutdrucksensor.

Weiterhin ist es von Vorteil, dass der Drucksensor selbst Ableitungsmittel zur Bestimmung des Druckänderungssignal aus einem gemessenen Absolutdruck aufweist. Hier ist nun vorgesehen, dass der Drucksensor den Druck absolut misst und dann durch eine Ableitung entweder analog oder digital das Druckänderungssignal erzeugt wird, so dass nur dieses Druckänderungssignal über die Leitung zum Steuergerät übertragen werden kann. Als Leitung bietet sich beispielsweise eine Zweidrahtleitung an.

Vorteilhafterweise kann die als Druckänderungssignal auf den Absolutdruck normiert sein. Dies kann bereits im Drucksensor selbst geschehen, entweder analog oder digital oder auch im Steuergerät. Ist die Lösung analog im Drucksensor, kann dafür eine Kompensationsschaltung verwendet werden. Die Kompensationsschaltung kann ein Analogdividierer sein. Alternativ kann dem Sensor ein Verstärker nachgeschaltet sein, dessen Verstärkung in Abhängigkeit von dem Absolutdruck eingestellt wird.

Schließlich ist es auch von Vorteil, dass die Vorrichtung ein integriertes Druckänderungssignal einer Hochpassfilterung unterzieht. Dies kann sowohl im Drucksensor als auch im Steuergerät vorkommen. Die Hochpassfilterung ist notwendig, um ein Offset im Signal, also einen Absolutwert bei der Frequenz 0 zu eliminieren. Daher hat der Hochpass üblicherweise eine untere Grenzfrequenz von 1 bis 2 Herz.

### Zeichnung

Ausführungsbeispiele der Erfindung sind in der Zeichnung dargestellt und werden in der nachfolgenden Beschreibung näher erläutert.

### Es zeigen

Figur 1 ein Blockschaltbild der erfindungsgemäßen Vorrichtung,
Figur 2 ein erstes Blockschaltbild des Drucksensors,
Figur 3 ein zweites Blockschaltbild des Drucksensors und
Figur 4 ein Flussdiagramm.

### Beschreibung

Zunehmend werden Drucksensoren für die Aufprallsensierung verwendet. Drucksensoren haben den Vorteil, dass sie im Vergleich zu Beschleunigungssensoren die bisher in großer Zahl zur Aufprallsensierung verwendet werden, einen Aufprall schneller sensieren als ein solcher Beschleunigungssensor. Diese Drucksensoren sind dabei üblicherweise in einem weitgehend geschlossenen Hohlraum untergebracht und messen den bei einem Crash auftretenden adiabatischen Druckanstieg, der in diesem Hohlraum auftritt, aufgrund der Volumenverkleinerung, die durch das eindringende Objekt hervorgerufen wird. Der Drucksensor ist dabei üblicherweise mit einem Steuergerät verbunden, das Personenschutzmittel wie Airbags, Gurtstraffer oder Überrollbügel ansteuert. Üblicherweise werden die Daten als Absolutdruckwerte übertragen. Die relative Druckänderung, die bei einem Crash auftritt liegt bei etwa 5 bis 10% des Absolutdruckwertes. Das zu detektierende Signal des Absolutdrucksensors geht von ca. 500 Millibar bis 1500 Millibar. Dies entspricht der Summe aus dem maximalen Absolutdruck plus Druckanstieg. Im ungünstigsten Fall bei ca. 500 Millibar beträgt die crashrelevante Druckänderung 50 Millibar, also nur 2,5% des gesamten Messbereichs des Sensors. Zur sicheren Diskriminierung von Auslöse- und nicht Auslösefall braucht man eine Auflösung von ca. 50 bis 100 Teilschritten der Diskriminierungsschwelle. Ein Auflösungsschritt entspricht daher 0,025% des 0,05%. Dies führt zu einer gewünschten Auflösung des Analogdigitalwandlers von 11 bis 12 Bit.

Vergleicht man das Signal mit Beschleunigungssignalen, so ergibt sich, dass das Drucksignal sich immer auf den Gesamtverlauf des Crashs bezieht, während Beschleunigungssignale immer die aktuellen Beschleunigungen wiedergeben und sich nur auf den aktuellen Zeitpunkt beziehen. Für das Drucksignal benötigt man 11 bis 12 Bit Auflösung während für das Beschleunigungssignal nur 8 bis 10 Bit notwendig sind. Im Algorithmus der die Auslöseentscheidung bildet, wird bei Beschleunigungssignalen das Beschleunigungssignal und das Integral des Beschleunigungssignale zur Crasherkennung herangezogen. Bei Drucksignalen kann das Drucksignal und dessen erste und zweite Ableitung zur Crasherkennung verwendet werden. Ableitungen nach der Analogdigitalwandlung sind aufgrund der Analogdigitalschwankung teilweise recht ungenau. Erfindungsgemäß wird daher vorgeschlagen, dass der Drucksensor zum Steuergerät ein Druckänderungssignal überträgt. Dieses Druckänderungssignal kann mit der niedrigen Auflösung wie das Beschleunigungssignal übertragen werden und die Probleme die bei der Ableitung des Drucksignals auftreten sind durch das Übertragen des Druckänderungssignal erheblich gemildert, denn nun braucht das Druckänderungssignal nur einmal abgeleitet werden und nur einmal integriert werden. Beides bedeutet eine höhere Zuverlässigkeit der betreffenden Werte.

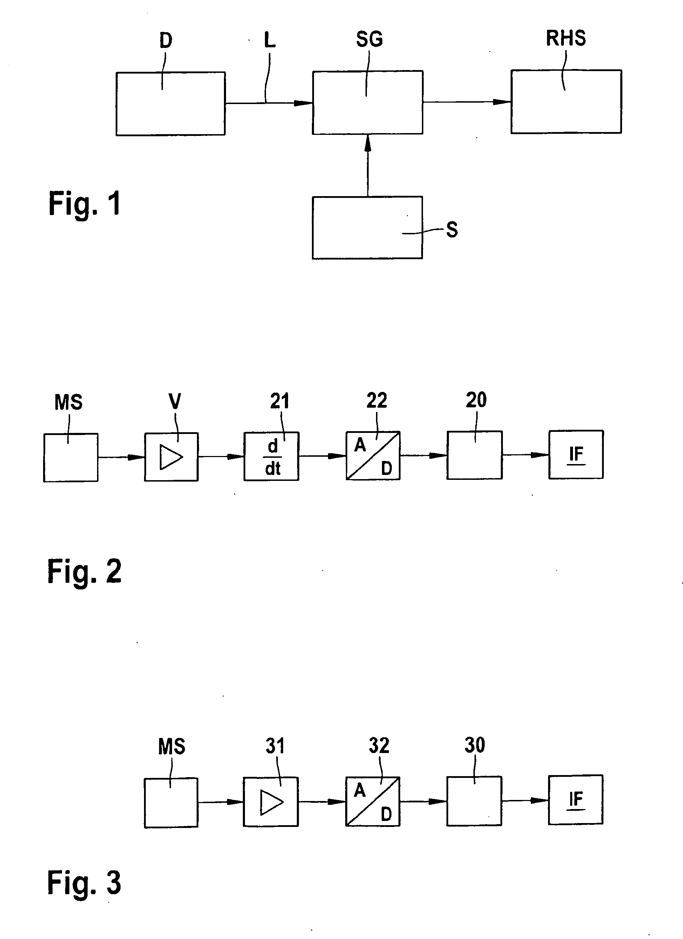

Figur 1 erläutert in einem Blockdiagramm die erfindungsgemäße Vorrichtung. Ein Drucksensor D ist über eine Leitung L an ein Steuergerät Sg angeschlossen. An einen zweiten Dateneingang des Steuergeräts Sg ist eine Sensorik S angeschlossen. Über einen Datenausgang ist das Steuergerät Sg mit Personenschutzmittels RHS verbunden. Beispielhaft ist hier nur ein Drucksensor dargestellt, es können jedoch mehrere Drucksensoren verwendet werden. Der Drucksensor D weist neben dem Messelement zur Erfassung des Drucks Filter, Verstärker einer Analogdigitalwandlung ein Digitalteil und einen Schnittstellenbaustein auf. Die Energieversorgung des Drucksensors wird üblicherweise über die Leitung L vom Steuergerät realisiert. Es findet hier also über die Leitung L dann eine Powerlinedatenübertragung statt. Zusätzlich weist der Drucksensor D erfindungsgemäß Ableitungsmittel auf, um einen gemessenen Absolutdruck in das Druckänderungssignal durch die einmalige Ableitung nach der Zeit zu erreichen. Alternativ ist es möglich, dass der Drucksensor D selbst derart konstruiert ist, dass er das Druckänderungssignal selbst misst. Der Drucksensor D ist üblicherweise in Hohlräumen von Seitenteilen oder aber auch in Kavitäten an der Fahrzeugfront oder im Fahrzeugheck angebracht. Die Datenübertragung zum Steuergerät SG kann über einen Bus erfolgen oder aber auch wie hier dargestellt über eine Datenleitung L, wobei der Drucksensor D unidirektional Daten vom Drucksensor D zum Steuergerät SG überträgt, wobei das Steuergerät Sg selbst keine Daten über die Leitung L zum Drucksensor D überträgt. Dies vereinfacht die Kommunikation und die entsprechenden Bausteine. Das Steuergerät SG wertet das Druckänderungssignal aus und zwar in einem Auslösealgorithmus für die Personenschutzmittel RHS. Diese Auslösealgorithmus wertet beispielsweise neben dem Druckänderungssignal auch das integrierte Druckänderungssignal also den Absolutdruck und die Ableitung des Druckänderungssignals aus. Zusätzlich verwendet das Steuergerät SG die Signale von einer Sensorik S, beispielsweise von Beschleunigungssensoren, die zur Plausibilität dienen und auch von Precrashsensoren, die zur Bestimmung der Unfallschwere verwendet werden oder von einer Insassensensorik, die Auskunft über die zu schützenden Personen gibt. Hier kann es sich um mehr oder weniger Sensoren handeln. In Abhängigkeit von diesen Signalen bestimmt dann der Algorithmus der auf einen Prozessor im Steuergerät SG abläuft die Ansteuerung von Rückhaltemitteln RHS. Auch die Rückhaltemittel RHS können über Einzelleitungen mit dem Steuergerät SG verbunden sein oder über einen Zündbus.

In Figur 2 ist ein erstes Blockschaltbild des Drucksensors D angegeben. Ein Messelement Ms liefert seine Messsignale, die üblicherweise dann auch noch tiefpassgefiltert werden, an einen Messverstärker V. Das verstärkte Signal wird dann analog durch einen Differenzierer 21 einmal nach der Zeit abgeleitet. Die einfachste Differenzierschaltung ist beispielsweise ein Hochpass. Üblicherweise werden jedoch hierfür Schaltungen mit Operationsverstärkern verwendet. Das so entstandene Druckänderungssignal wird dann von einem Analogdigitalwandler 22 digitalisiert, wobei hier eine Auflösung von 8 Bit verwendet wird. Das digitale Signal wird dann in einem Digitalteil 20 hochpassgefiltert und zwar elektronisch um einen Offset zu eliminieren und dann über den Interphasebaustein If und die Leitung L zum Steuergerät SG übertragen. Diese Vorgehensweise ist besonders vorteilhaft, um temperaturabhängige Offsetdriften im Analogteil des Sensors auszugleichen. Eine weitere Möglichkeit ist, dass das übertragene Signal die Druckänderung ist. Von diesem Signal gibt es zwei zusätzliche Pfade, die Ableitung und die Integration. Bei der Integration kann man die Hochpassfilterung mit einbauen, um eine Offsetdrift des abgleiteten Signals dann wieder auszugleichen.

Figur 3 zeigt eine alternative Konfiguration des Drucksensors D. Das Messelement Ms ist an einen Messverstärker 31 angeschlossen. Das verstärkte Signal wird einem Analogdigitalwandler 32 zugeführt, der das Signal als ein 8 Bit-Signal digitalisiert. Dieses Signal wird dem Digitalteil 30 zugeführt, der die Differenzierung digital durchführt. Wiederum wird dann das Druckänderungssignal über den Baustein IF und die Leitung L an das Steuergerät SG übertragen. Weitere Konfigurationen, die zum gleichen Ergebnis führen und für den Fachmann leicht erkennbar sind, sind hier möglich.

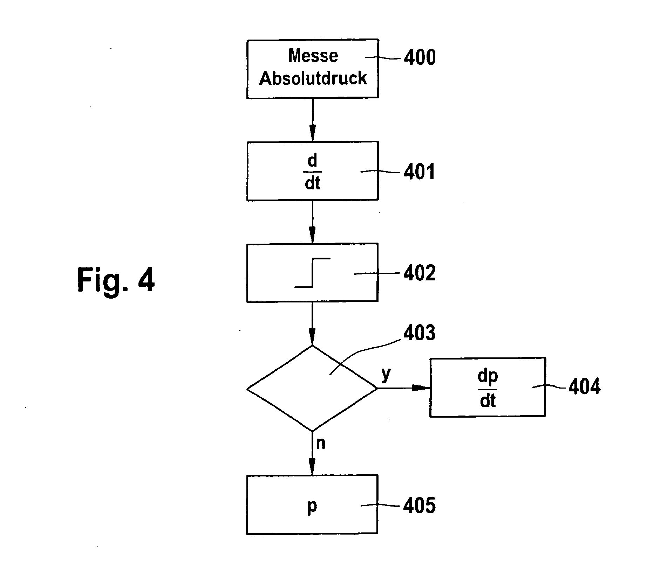

Figur 4 erläutert in einem Flussdiagramm den Ablauf, den die erfindungsgemäße Vorrichtung durchläuft. In Verfahrensschritt 400 wird der Absolutdruck mit dem Messelement Ms gemessen. Der Absolutdruck wird dann in Verfahrensschritt 401 nach Messverstärkung und gegebenenfalls Digitalisierung differenziert und zwar entweder im analogen oder im digitalen und dann einer Schwellwertentscheidung im Verfahrensschritt 402 zugeführt zu werden. Wurde dieser Schwellwertentscheidung im Verfahrensschritt 403 entnommen, dass der Schwellwert überschritten wurde, dann wird im Verfahrensschritt 404 das Druckänderungssignal übertragen. Wurde dieser Schwellwert nicht überschritten, dann wird in Verfahrensschritt 405 der Absolutdruck übertragen. Der Schwellwertvergleich zeigt, ob ein crashrelevantes Signal vorliegt und dann muss das Druckänderungssignal übertragen werden, da dies eine bessere Auswertung ermöglicht. Eine Normierung auf den Umgebungsdruck kann zum einen direkt im Sensor D erfolgen oder im Steuergerät SG. Die Normierung im Sensor D würde analog in einer Kompensationsschaltung abhängig vom Umgebungsschritt und digital in einer Rechenoperation durchgeführt werden. Erfolgt die Normierung im Steuergerät SG, so muss der Sensor D auch den Umgebungsdruck übermitteln. Eine entsprechende mögliche Vorgehensweise wurde im Flussdiagramm, Figur 4 dargestellt. Der Sensor D weist nämlich einen Schalter für den Analogdigitalwandler auf, der zwischen Absolutdruckmessung und der abgeleiteten Druckmessung umschalten kann. Ein Trigger auf das abgeleitete analoge Signal betätigt diesen Schalter. Der Sensor D sendet während der normalen Operation im Umgebungsdruck, bis das abgeleitete Signal einen Schwellwert überschreitet. Danach wird nur noch das abgeleitete Signal übertragen. Das Steuergerät SG erkennt dies und startet den Druckalgorithmus, wobei die aktuellen Daten auf den vorher übertragenen Umgebungsdruck normiert werden. Da das Signal einem Beschleunigungssignal ähnelt, ist es auch möglich Algorithmen zu verwenden, die für Beschleunigungssignale konzipiert wurden.

## Patentansprüche

1. Vorrichtung zur Aufprallerkennung mit wenigstens einem Drucksensor (D) zur Aufprallerkennung, wobei der wenigstens eine Drucksensor (D) mit einem Steuergerät (SG) zur Ansteuerung von Personenschutzmittel (RHS) verbindbar ist, wobei der Drucksensor (D) derart konfiguriert ist, dass der Drucksensor (D) ein Druckänderungssignal an das Steuergerät (SG) überträgt, **dadurch gekennzeichnet, dass** der Drucksensor (D) in Abhängigkeit vom Druckänderungssignal entweder das Druckänderungssignal oder den Absolutdruck an das Steuergerät (SG) überträgt.

2. Vorrichtung nach Anspruch 1, **dadurch gekennzeichnet, dass** der Drucksensor (D) zur Messung des Druckänderungssignals konfiguriert ist.

3. Vorrichtung nach Anspruch 1, **dadurch gekennzeichnet, dass** der Drucksensor (D) Ableitungsmittel (21) zur Bestimmung des Druckänderungssignals aus einem gemessenen Absolutdruck aufweist.

4. Vorrichtung nach Anspruch 3, **dadurch gekennzeichnet, dass** das Ableitungsmittel (21) analog ausgebildet sind.

5. Vorrichtung nach Anspruch 3, **dadurch gekennzeichnet, dass** die Ableitungsmittel (30) digital ausgeführt sind.

6. Vorrichtung nach einem der vorherigen Ansprüche, **dadurch gekennzeichnet, dass** die Vorrichtung derart konfiguriert ist, dass die Vorrichtung das Druckänderungssignal auf den Absolutdruck normiert.

7. Vorrichtung nach einem der vorherigen Ansprüche, **dadurch gekennzeichnet, dass** die Vorrichtung derart konfiguriert ist, dass die Vorrichtung ein initiiertes Druckänderungssignal einer Hochpassfilterung unterzieht.

## Claims

1. Device for detecting impacts with at least one pressure sensor (D) for detecting impacts, wherein the at least one pressure sensor (D) can be connected to a control device (SG) for actuating personal protection means (RHS), wherein the pressure sensor (D) is configured in such a way that the pressure sensor (D) transmits a pressure change signal to the control device (SG), **characterized in that** the pressure sensor (D) transmits either the pressure change signal or the absolute pressure to the control device (SG) as a function of the pressure change signal.

2. Device according to Claim 1, **characterized in that** the pressure sensor (D) is configured to measure the pressure change signal.

3. Device according to Claim 1, **characterized in that** the pressure sensor (D) has derivation means (21) for determining the pressure change signal from a measured absolute pressure.

4. Device according to Claim 3, **characterized in that** the derivation means (21) are of analogue design.

5. Device according to Claim 3, **characterized in that** the derivation means (30) are of digital design.

6. Device according to one of the preceding claims, **characterized in that** the device is configured in such a way that the device standardizes the pressure change signal to the absolute pressure.

7. Device according to one of the preceding claims, **characterized in that** the device is configured in such a way that the device subjects an initiated pressure change signal to high-pass filtering.

## Revendications

1. Dispositif de détection d'une collision comprenant au moins un capteur de pression (D) pour détecter la collision, au moins ce capteur (D) étant relié à un appareil de commande (SG) pour commander un moyen de protection de personnes (RHS), le capteur de pression (D) étant configuré pour transmettre un signal de variation de pression à l'appareil de commande (SG),
**caractérisé en ce que**
le capteur de pression (D) transmet soit le signal de variation de pression soit la pression absolue en fonction du signal de variation de pression vers l'appareil de commande (SG).

2. Dispositif selon la revendication 1,
**caractérisé en ce que**
le capteur de pression (D) est configuré pour mesurer le signal de variation de pression.

3. Dispositif selon la revendication 1,
**caractérisé en ce que**
le capteur de pression (D) comporte des moyens de dérivation (21) pour déterminer le signal de variation de pression à partir de la pression absolue mesurée.

4. Dispositif selon la revendication 3,
**caractérisé en ce que**
le moyen de dérivation (21) est un moyen analogique.

5. Dispositif selon la revendication 3,
**caractérisé en ce que**
le moyen de dérivation (30) est un moyen numérique.

6. Dispositif selon l'une quelconques des revendications précédentes,
**caractérisé en ce que**
le dispositif est configuré pour normer le signal de variation de pression par rapport à la pression absolue.

7. Dispositif selon l'une quelconques des revendications précédentes,
**caractérisé en ce que**
le dispositif est configuré pour soumettre un signal de variation de pression initié à un filtrage passe-haut.
